# EUROPÄISCHE PATENTSCHRIFT

(11) **EP 0 684 768 B1**
(45) Veröffentlichungstag und Bekanntmachung des Hinweises auf die Patenterteilung: **27.06.2001**
(21) Anmeldenummer: 94929548.9
(22) Anmeldetag: 14.10.1994
(51) Int. Cl.: A22C 13/00

(54) **ESSBARE UMHÜLLUNGSFOLIE FÜR LEBENSMITTEL**
EDIBLE FOODSTUFF WRAPPING FOIL
FEUILLE COMESTIBLE D'ENROBAGE DE DENREES ALIMENTAIRES

(30) Priorität: 21.12.1993 DE 4343670
(43) Veröffentlichungstag der Anmeldung: 06.12.1995
(73) Patentinhaber: Naturin GmbH & Co, D-69469 Weinheim (DE)
(72) Erfinder: PEIFFER, Bernd, D-69234 Dielheim (DE); KEIL, Joachim, D-69469 Weinheim (DE); MASER, Franz, D-68159 Mannheim (DE)
(74) Vertreter: Siewers, Gescha, Dr.
(86) Internationale Anmeldenummer: EP9403395
(87) Internationale Veröffentlichungsnummer: WO9517100

(56) Entgegenhaltungen:
- DE-C- 970 263
- FR-A- 2 175 946
- FR-A- 2 356 376
- GB-A- 1 107 094
- US-A- 4 874 622
- DATABASE WPI Week 7730, Derwent Publications Ltd., London, GB; AN 77-52921 & JP,A,52 070 039 (SUMITOMO BAKELITE K.K.) 10. Juni 1977
- DATABASE WPI Week 9109, Derwent Publications Ltd., London, GB; AN 91-061836 & JP,A,3 010 660 (NISSHIN HAM K.K.) 18. Januar 1991
- DATABASE WPI Week 8020, Derwent Publications Ltd., London, GB; AN 80-34712 & DD,A,140 196 (KONSUM-FLEISCHVER) 20. Februar 1980

## Beschreibung

Die Erfindung betrifft eßbare Umhüllungsfolien für Lebensmittel auf der Basis von Kollagen.

Eßbare Kollagenflachfolien sind an sich bekannt und werden in großem Umfang weltweit zum Umhüllen von Nahrungsmitteln wie beispielsweise Schinken eingesetzt. Die Herstellung von Kollagenfolien wird beispielsweise in der DE-PS 642 922 beschrieben. Die Verwendung als Hülle für Lebensmittel ist unter anderem aus der DE-PS 19 45 527 und die Verwendung zum Einwickeln von Fleischprodukten ist aus der US-PS 3014024 bekannt. Unter Kollagen werden im folgenden native und modifizierte Kollagene verstanden und auch Kollagene, die beispielsweise durch Enzymbehandlung in ihrer Löslichkeit verändert worden sind; derartige Kollagene sind unter anderem in der der DE-PS 17 67 613 und 19 60 395 oder in der US-PS 3664849 beschrieben.

Eine Umhüllungsfolie entsprechend dem Oberbegriff von Anspruch 1 ist aus JP-A-52 070 039 bekannt.

Es ist auch bereits bekannt, so beispielsweise aus der DE-PS 970 263, Umhüllungsmaterial für Lebensmittel mit löslichen Farb- und Aromastoffen auszustatten, wobei das Aroma und die Farbe auf das in das Material eingewickelte Lebensmittel übergehen sollen. Nach dieser Veröffentlichung kann beispielsweise eine Wursthülle durch eine wäßrige Glycerinlösung gezogen werden, die einen löslichen Farbstoff für Lebensmittel und einen Geschmacksstoff wie beispielsweise alkoholische Extrakte von Knoblauch oder Zwiebeln oder sogenannten Flüssigrauch enthält. Die Wursthüllen werden also imprägniert mit löslichen Aroma- und Farbstoffen, die an an das verpackte Nahrungsmittel beim Lagern abgegeben werden. Der Nachteil bei diesen bekannten Verfahren ist allerdings, daß durch ein Imprägnieren der Umhüllungsfolie mit Aromastoffen nur bestimmte Geschmacksvarianten vermittelt werden, denn lösliche Extrakte von Gewürzen sind teilweise im olfaktorischem Bereich deutlich unterschiedlich von frisch verarbeitetem Gesamtgewürz und, was noch schwerer wiegt, derartige Extrakte sind in der Regel nicht lagerstabil, da ein Teil der flüchtigen Bestandteile beim Lagern verdampft und sich damit die Geschmacksnote ändert, wobei auch noch hinzukommt, daß Gewürzextrakte, seien sie alkoholisch oder wäßrig, oxidations- und temperaturempfindlich sind. Je feiner Gewürzzubereitungen zerteilt sind oder je großflächiger alkoholische oder wäßrige Extrakte verteilt werden, desto schneller ändert sich die Zusammensetzung der Aromastoffe durch Verdampfen oder chemische Veränderung, womit sich auch der olfaktorische Eindruck verändert, d.h. in der Regel deutlich verschlechtert. Der bisher übliche Zusatz von löslichen Aromastoffen zu Umhüllungsfolien hat daher nicht zu befriedigenden Ergebnissen geführt. Auf der anderen Seite haben Versuche, Folien nachträglich mit in Partikelform vorliegenden Gewürzen zu beschichten, ebenfalls keinen Erfolg gehabt, da solche Beschichtungen nur mit Hilfe eines Bindemittels oder Klebstoffes aufgetragen werden können und außerdem größere und meist scharfkantige Gewürzpartikel die relativ dünnen Folien häufig beschädigen, und zwar besonders dann, wenn die Folien in Rollenform gelagert werden.

Es besteht daher noch ein Bedürfnis nach Umhüllungsfolien für Lebensmittel der verschiedensten Art, die gleichzeitig als Träger für Aromastoffe und ggf. Farbstoffe geeignet sind.

Erfindungsgemäß werden nunmehr eßbare Umhüllungsfolien für Lebensmittel auf der Basis von Kollagen vorgeschlagen, die dadurch gekennzeichnet sind, daß sie als integrierten Bestandteil feinteilige Gewürze enthalten.

Überraschenderweise wurde gefunden, daß die Nachteile beim nachträglichen Bestreuen fertiger Folien oder bei der Verwendung von löslichen Aromaextrakten vermieden werden können, wenn man als Basismaterial für die Umhüllungsfolien an und für sich bekannte Kollagenfolien einsetzt, die feinteilige Gewürze als integrierten Bestandteil der Folie enthalten. Unter einem integrierten Bestandteil der Folie wird dabei verstanden, daß die Gewürzpartikel in die Kollagenfolie eingebettet und zumindest teilweise von dieser umschlossen sind. Vorzugsweise sollte dabei der überwiegende Anteil der Gesamtoberfläche der Gewürze sich innerhalb der Kollagenschicht der Folie befinden, was allerdings nicht ausschließt, daß auf der später dem Lebensmittel zugewandten Seite der Folie ein Teil der Partikel nur teilweise in die Folie eingebettet ist. In einer bevorzugten Ausführungsform weist die Umhüllungsfolie auf ihrer später nach außen weisenden Oberfläche eine im wesentlichen geschlossene Haut auf, die etwa 25% der Gesamtschichtdicke der Folie oder weniger ausmachen kann.

Dadurch, daß die Gewürze als diskrete Partikel, die sich überwiegend mindestens teilweise innerhalb der Kollagenschicht der Folie befinden, eingesetzt werden, wird erreicht, daß die leichtflüchtigen oder relativ schnell chemisch veränderbaren Aromastoffe der Gewürze auch relativ gut geschützt sind. In dieser Form werden die Folien vorzugsweise dann eingesetzt, wenn das damit umhüllte Nahrungsmittel sowieso noch in eine weitere Verpackungsfolie zur Erhöhung der Lagerfähigkeit eingebracht wird bei beispielsweise bei fertigproportionierten Fleischwaren oder Backwerk in die handelsüblichen lebensmittelrechtlich unbedenklichen verschweißbaren Polyesterfolien. Falls eine zusätzliche Verpackung nicht vorgesehen ist, hat es sich als vorteilhaft herausgestellt, wenn die Umhüllungsfolie selbst auf der nach außen zeigenden Seite eine im wesentlichen geschlossene Haut aufweist, um das Austreten von Aromastoffen nach außen und einen zu hohen Feuchtigkeitsverlust zu vermeiden. Die Stärke der im wesentlichen geschlossenen Haut kann etwa 25% oder weniger der Gesamtschichtdicke der Folie ausmachen. Da die Umhüllungsfolien in der Regel in Rollenform in den Handel gebracht werden, liegt die "offene" Seite der Folie mit den ganz oder teilweise integrierten Gewürzpartikeln in aufgerollter Form nach innen, während die geschlossene Außenhaut diese Seite der Folie schützt und bei hinreichender Schichtdicke auch eine Beschädigung der Oberfläche durch zu große oder scharfkantige Partikel verhindert. Die erfindungsgemäßen Umhüllungsfolien sind im Vergleich zu den bisher bekannten Umhüllungsmaterialien wesentlich lagerstabiler und vielseitiger einsetzbar, da eine Veränderung der Aromastoffe weitgehend vermieden wird, während sie auf der anderen Seite alle Vorteile einer Umhüllungsfolie aus Kollagen bezüglich Reduzierung der Gaspermeatbilität und Feuchtigkeitsschutz aufweisen.

Die erfindungsgemäßen Umhüllungsfolien können aus Kollagengelen hergestellt werden, deren Fabrikation beispielsweise in der DE-PS 642 922 oder in der WO92/01394 beschrieben ist. Das Gel wird vor Überführung in einen Extruder homogen mit den feinteiligen Gewürzpartikeln vermischt, dann in einen Extruder überführt und in an sich bekannter Weise auf ein Laufband extrudiert und weiterverarbeitet. In einer bevorzugten Ausführungsform wird das in bekannter Weise hergestellte Gel in einen Extruder überführt und auf ein Laufband extrudiert, welches mit einer dünnen Schicht des in Partikelform vorliegenden Gewürzes bedeckt ist, so daß die Gewürzpartikel direkt in das aus der Düse austretende Gel integriert und inkorporiert werden. Um eine möglichst geschlossene äußere Oberfläche zu erhalten, sollte die Partikelgröße etwa ¾ der Schichtdicke der Folie betragen. Die Schichtdicke der Folie richtet sich nach dem beabsichtigten Verwendungszweck und variiert in der Regel zwischen etwa 8 bis 80 und vorzugsweise 10 bis 25 µm. Die extrudierte Folie wird dann in üblicher Weise auf einen vorgegebenen pH-Wert eingestellt, getrocknet und auf einen vorgegebenen Wassergehalt rekonditioniert. Es sind aber auch andere Verfahren zur Herstellung der erfindungsgemäßen Folien möglich, so kann man beispielsweise das Kollagengel vor der Extrusion mit den Gewürzpartikeln gewünschter Größe homogen vermischen und diese Mischung in üblicher Weise zu Folien extrudieren, auf die dann in einem zweiten Arbeitsgang eine im wesentlichen geschlossene Außenhaut als weitere Schicht in an sich bekannter Weise aufgebracht wird, bevor diese zweischichtige Folie dann in üblicher Weise getrocknet und konditioniert wird. Auch andere Herstellungsverfahren sind dem Fachmann aufgrund seines Fachwissens geläufig, so beispielsweise die Herstellung entsprechender Laminatfolien durch Verkleben mit physiologisch unbedenklichen und lebensmittelrechtlich zulässigen Klebstoffen.

Es hat sich gezeigt, daß es in manchen Fällen wünschenswert ist, außer den in Partikelform vorliegenden Gewürzen zusätzlich lösliche Aroma- oder Farbstoffe in das Kollagengel einzuarbeiten und dann in der angegebenen Weise weiterzuverarbeiten, so daß die Folie Aromastoffe in gelöster und in Partikelform gleichzeitig enthält. Für viele Fleischprodukte schätzt der Käufer einen Rauchgeschmack, wie beispielsweise bei Kassler Rippenspeer oder manchen Wurstsorten wie Leberwurst, Gänsebrust usw. Da sogenannter Flüssigrauch keine besonders leichtflüchtigen Verbindungen enthält, können diese dann auch als Lösung dem Kollagengel zugesetzt werden, das seinerseits beispielsweise in Partikelform vorliegenden schwarzen Pfeffer enthält. Ähnliches gilt auch für Backwaren, da z.B. Zimt ein sehr sensibles Gewürz ist und daher nur in Partikelform in das Umhüllungsmaterial eingebracht werden sollte, während gleichzeitig Vanillin bemerkenswert oxidations- und temperaturstabil ist und somit als Lösung eingesetzt werden kann. Außer löslichen Aromastoffen können die erfindungsgemäßen Folien zusätzlich auch Farbstoffe in löslicher oder Partikelform enthalten, soweit diese lebensmittelrechtlich unbedenklich sind und eine gleichzeitige Anfärbung der Oberfläche des Lebensmittels erwünscht ist wie beispielsweise auch wiederum im Falle von Fleischwaren oder auch bei Backwaren.

Die erfindungsgemäßen eßbaren Umhüllungen können unbedenklich mitgegessen werden, da die Kollagenfolien im Körper vollständig abgebaut werden und geschmacklich, da sie in der Regel sehr dünn sind, nicht eigenständig in Erscheinung treten. Eingesetzt werden können die Folien nicht nur für Lebensmittel der "salzig-würzigen" Geschmacksrichtung wie Fleischwaren, insbesondere Schinken, fertig proportionierten Bratenstücken und Wurstwaren oder Käse wie beispielsweise Rauchkäse und andere Hartkäsesorten, sondern auch bei Lebensmitteln der "süßen" Geschmacksrichtung, und zwar hier insbesondere bei Back- und Konditorwaren.

Für den Fall, daß Aromaträger als alleiniges oder zusätzliches Gewürz verarbeitet werden sollen, die von Haus aus flüssig sind, wie beispielsweise Ahornsirup, Sojasoße oder ähnliches, so können diese Produkte entweder als lösliche Aromastoffe eingesetzt werden oder sie werden vor der Verarbeitung auf einen lebensmittelrechtlich unbedenklichen Träger wie beispielsweise Stärke aufgebracht oder sie werden in mikroverkapselter Form eingesetzt und können dann wie die übrigen Gewürze in Partikelform in die Folie integrierter werden. Unlösliche Farbstoffe und -pigmente sowie auf Träger aufgebrachte Aromastoffe oder solche, die in mirkoverkapselter Form vorliegen, werden ebenso wie die festen Gewürzpartikel nach einem der oben beschriebenen Verfahren in die Folie eingearbeitet.

Als Gewürze oder Aromastoffe kommen insbesondere in Betracht Angelika, Anis, Basilikum, Beifuß, Bohnenkraut, Borretsch, Brunnenkresse, Chilis, Curcuma, Dill, Dost, Estragon, Fenchel, Galgant, Gewürznelken, Ingwer, Kalmus, Kapern, Kardamom, Kerbel, Knoblauch, Koriander, Kümmel, Liebstöckel, Lorbeer, Mazis, Majoran, Melisse, Meerrettich, Mohn, Muskatnuß, Oregano, Paprika, Pastinak, Petersilie, Pfeffer, Pfefferminz, Piment, Pimpinelle, Rosmarin, Safran, Salbei, Sauerampfer, Schnittlauch, Sellerie, Senf, Sesam, Sternanins, Thymian, Trüffel, Vanille, Wacholder, Waldmeister, Weinraute, Ysop, Zimt, Zitrone, Zitronenmelisse, Zwiebel sowie Gewürzmischungen wie Curry oder Cajum.

Neben diesen in der Mehrheit auf den europäischen Geschmack ausgerichteten Gewürzen können aber auch Gewürze und Gewürzmischungen verarbeitet werden, wie sie heute unter dem Oberbegriff Ethnofood zusammengefaßt werden, wozu beispielsweise dann noch Bockshornsamen, Cubeben, Asant, aber auch Tonkabohnen oder Rosenblätter gehören.

### Die Erfindung wird im folgenden anhand der Beispiele näher erläutert:

### Beispiel 1

Herstellung einer Folie mit Paprikapulver

Zur Herstellung einer Kollagenfolie mit Paprikapulver werden der verarbeitungsbereiten Kollagensuspension 1% Paprikapulver, bezogen auf die Gesamtmasse, zugegeben. Die mittlere Korngröße des Paprikapulvers betrug 10 µm, wobei etwa 80% des eingesetzten Pulvers bei der Korngrößenanalyse in diesen Bereich fielen und der maximale Durchmesser des verwendeten Pulvers im Bereich von 15 µm lag. Nach gleichmäßigem Durchmischen der Masse wird diese in an sich bekannter Weise mit Hilfe einer geeigneten Extrusionsdüse in Form einer Flachfolie mit einer Schichtdicke von 20 µm extrudiert, getrocknet und rekonditioniert.

Die Folie ist fast durchscheinend und weist einen Rotton entsprechend reifen roten Paprikas auf. Die Folie riecht intensiv nach Paprika. Diese Folie wird vorzugsweise zum Umhüllen von Rohschinken eingesetzt.

### Beispiel 2

Zur Herstellung einer Pfefferfolie wird eine Mischung aus schwarzem, weißem und roten Pfeffer zu groben Pulver verarbeitet, bei dem die Partikelgröße zu etwa 80% im Bereich von 20 bis 30 µm liegt. Diese Pulvermischung wird mit Hilfe einer Streuvorrichtung homogen auf das Laufband zur Herstellung der Folie aufgetragen. Danach wird die Kollagensuspsension in Form einer Flachfolie auf die ausgestreute Gewürzmischung extrudiert, wobei sich auf der dem Laufband abgewandten Seite eine durchgängige Haut auf der Folie bildet. Die Folie wird dann in an sich bekannter Weise getrocknet und rekonditioniert.

Diese Folie kann bequem aufgerollt werden, wobei die Pfefferschicht nach innen zu liegen kommt. Die Folie sieht aufgrund der unterschiedlichen Färbung des körnigen Pfefferpulvers gesprenkelt aus und verfügt über einen intensiven Pfeffergeruch. Diese Folie kann zum Verpacken von rohem Schinken oder Rohwürsten bevorzugt eingesetzt werden.

### Beispiel 3

Eine zur Extrusion vorbereitete Kollagensuspension wird mit 0,1% Vanillin, bezogen auf das Gesamtgewicht der zu verarbeitenden Masse, gelöst in Wasser, versetzt und kräftig durchmischt. Auf das Laufband zum Ablegen der Folie wird eine dünne Schicht Zimtpulver mit einer durchschnittlichen Partikelgröße von 5 bis 8 µm durch eine Streuvorrichtung aufgebracht. Die Kollagensuspension wird dann mit einer geeigneten Schlitzdüse direkt auf das vorbereitete Laufband aufextrudiert. Die nach dem Trocknen und Rekonditionieren fast durchscheinende Folie weist eine satte braune Färbung und einen intensiven Geruch nach Zimt und Vanillie auf. Diese Folie wird bevorzugt zum Verpacken von Sandkuchen oder ähnlichem Gebäck eingesetzt.

## Patentansprüche

1. Essbare Umhüllungsfolie für Lebensmittel auf der Basis von Kollagen, die als integrierten Bestandteil feinteilige Gewürze enthält dadurch gekennzeichnet, daß die später dem Lebensmittel abgewandte Oberfläche der Folie eine geschlossene Haut aufweist, so daß die Gewürzpartikel auf der dem Lebensmittel abgewandten Seite von der Folie umschlossen sind.

2. Umhüllungsfolie nach Anspruch 1, dadurch gekennzeichnet, daß der überwiegende Anteil der Gesamtoberfläche der Gewürzpartikel sich innerhalb der Kollagenschicht der Folie befindet.

3. Umhüllungsfolie nach Anspruch 1 und 2, dadurch gekennzeichnet, daß die Gewürzpartikel sich überwiegend in der die Innenseite der Umhüllungsfolie bildenden Folienbereich befinden.

4. Umhüllungsfolie nach den Ansprüchen 1 bis 3, dadurch gekennzeichnet, daß die geschlossene Haut etwa 25 % der Gesamtdicke der Folie ausmacht.

5. Umhüllungsfolie nach Anspruch 1 bis 4, dadurch gekennzeichnet, daß sie zusätzlich lösliche Aromen enthält.

6. Umhüllungsfolie nach Anspruch 1 bis 5, dadurch gekennzeichnet, daß sie lösliche Aromen in Verbindung mit inerten Trägern oder in mikroverkapselter Form enthält.

7. Umhüllungsfolie nach Anspruch 1 bis 6, dadurch gekennzeichnet, daß sie weiterhin unlösliche, partikelförmige oder lösliche Farbstoffe enthält.

8. Umhüllungsfolie nach Anspruch 1 bis 7, dadurch gekennzeichnet, daß die Schichtdicke der Folie vorzugsweise 10 bis 40 µm beträgt.

9. Verfahren zur Herstellung der Umhüllungsfolie nach Anspruch 1 bis 8, dadurch gekennzeichnet, daß ein in an sich bekannter Weise hergestelltes Kollagengel in an sich bekannter Weise als Folie auf ein Ablegeband extrudiert wird, wobei das Band mit einer dünnen Schicht des in Partikelform vorliegenden Gewürzes und ggf. der partikelförmigen Farbstoffe bedeckt ist und die Folie nach dem Überdecken der Partikel in an sich bekannter Weise, getrocknet, auf einen vorgegebenen pH eingestellt und rekonditioniert wird.

10. Verfahren zur Herstellung von Umhüllungsfolien nach Anspruch 1 bis 8, dadurch gekennzeichnet, daß dem Kollagengel vor dem an sich bekannten Extrudieren feinteilige Gewürze und ggf. unlösliche Farbstoffe und/oder auf Trägern aufgebrachte oder mikroverkapselte lösliche Aromastoffe homogen beigemischt, die extrudierte Folie in an sich bekannter Weise auf einen vorgegebenen pH eingestellt, getrocknet und rekonditioniert und dann mit einer weiteren Folie mit einer im wesentlichen geschlossenen Oberfläche in an sich bekannter Weise laminiert wird.

11. Verfahren nach Anspruch 9 oder 10, dadurch gekennzeichnet, daß dem Kollagengel vor dem Extrudieren lösliche Aroma- und/oder Farbstoffe homogen zugemischt werden.

## Claims

1. An edible collagen-based wrapping film for food, containing fine seasonings as an integrated constituent, characterised in that the film surface subsequently facing away from the food has a closed skin, so that the seasoning particles are enclosed by the film on the side facing away from the food.

2. A wrapping film according to Claim 1, characterised in that the majority of the total surface of the seasoning particles is located within the collagen layer of the film.

3. A wrapping film according to Claims 1 and 2, characterised in that the seasoning particles are located predominantly in the film region forming the inner side of the wrapping film.

4. A wrapping film according to Claims 1 to 3, characterised in that the closed skin forms approximately 25% of the total thickness of the film.

5. A wrapping film according to Claims 1 to 4, characterised in that in addition it contains soluble flavourings.

6. A wrapping film according to Claims 1 to 5, characterised in that it contains soluble flavourings in conjunction with inert carriers or in microencapsulated form.

7. A wrapping film according to Claims 1 to 6, characterised in that furthermore it contains colourings which are insoluble and particle-shaped or which are soluble.

8. A wrapping film according to Claims 1 to 7, characterised in that the layer thickness of the film is preferably 10 to 40 µm.

9. A method of producing the wrapping film according to Claims 1 to 8, characterised in that a collagen gel produced in a manner known per se is extruded as a film onto a depositing belt in a manner known per se, the belt being covered with a thin layer of the seasoning present in particle form and optionally of the particle-shaped colourings, and, after covering over of the particles, the film is dried, adjusted to a given pH and reconditioned in a manner known per se.

10. A method of producing wrapping films according to Claims 1 to 8, characterised in that fine seasonings and optionally insoluble colourings and/or flavourings - the latter being applied to carriers or being microencapsulated and soluble - are homogeneously admixed to the collagen gel before the extrusion known per se, the extruded film is adjusted to a given pH, dried and reconditioned in a manner known per se and is then laminated in a manner known per se with another film with a substantially closed surface.

11. A method according to Claim 9 or 10, characterised in that soluble flavourings and/or colourings are homogeneously admixed to the collagen gel before extrusion.

## Revendications

1. Film d'enveloppe comestible pour produits alimentaires à base de collagène, contenant des épices en fines particules en tant qu'ingrédient intégré, caractérisé en ce que la surface du film qui par la suite est éloignée du produit alimentaire présente une peau fermée, de sorte que les particules d'épices sont enfermées par le film.

2. Film d'enveloppe selon la revendication 1, caractérisé en ce que la majeure partie de la surface totale des particules d'épices est située à l'intérieur de la couche de collagène du film.

3. Film d'enveloppe selon les revendications 1 et 2, caractérisé en ce que les particules d'épices sont situées essentiellement dans la partie de film qui constitue la face intérieure du film d'enveloppe.

4. Film d'enveloppe selon les revendications 1 à 3, caractérisé en ce que la peau fermée représente environ 25% de l'épaisseur totale du film.

5. Film d'enveloppe selon les revendications 1 à 4, caractérisé en ce qu'il contient en outre des arômes solubles.

6. Film d'enveloppe selon les revendications 1 à 5, caractérisé en ce qu'il contient des arômes solubles combinés à des supports inertes ou sous une forme micro-encapsulée.

7. Film d'enveloppe selon les revendications 1 à 6, caractérisé en ce qu'il contient en outre des colorants non solubles, des colorants sous forme de particules ou des colorants solubles.

8. Film d'enveloppe selon les revendications 1 à 7, caractérisé en ce que l'épaisseur du film d'enveloppe est comprise de préférence entre 10 et 40 µm.

9. Procédé de fabrication du film d'enveloppe selon les revendications 1 à 8, caractérisé en ce qu'on extrude de manière connue en soi, sous la forme d'un film appliqué sur une bande-support, un gel de collagène fabriqué d'une manière connue en soi, la bande étant recouverte d'une fine couche d'épices réduites à l'état de particules et le film, après couverture des particules, étant séché d'une manière connue en soi, amené à un pH prédéfini et reconditionné.

10. Procédé de fabrication du film d'enveloppe selon les revendications 1 à 8, caractérisé en ce qu'on incorpore de manière homogène dans le gel de collagène, avant l'opération d'extrusion connue en soi, des épices en fines particules et éventuellement des colorants non solubles et/ou des colorants appliqués sur des supports ou des substances aromatiques solubles micro-encapsulées, on règle de manière connue en soi le pH du film extrudé à une valeur prédéterminée, on sèche le film et on le reconditionne, puis on le lamine de manière connue en soi avec un film supplémentaire dont la surface est essentiellement fermée.

11. Procédé selon la revendication 9 ou 10, caractérisé en ce qu'on incorpore de manière homogène des arômes solubles et/ou des colorants dans le gel de collagène, avant son extrusion.
